# EUROPÄISCHE PATENTANMELDUNG

(11) **EP 0 962 892 A2**
(43) Veröffentlichungstag der Anmeldung: **08.12.1999**
(21) Anmeldenummer: 99108486.4
(22) Anmeldetag: 30.04.1999
(51) Int. Cl.: G06T 17/00

(54) **Verfahren zur rechnerunterstützten Beschriftung einer Zeichnung in einer auswählbaren Sprache**

(30) Priorität: 04.06.1998 DE 19824884
(71) Anmelder: Festo AG & Co, 73734 Esslingen (DE)
(72) Erfinder: Machau, Norbert, 73035 Göppingen (DE); Hochmann, Karsten, 73773 Aichwald (DE)
(74) Vertreter: Vetter, Hans, Dipl.-Phys. Dr.

(57) **Zusammenfassung**

Die Erfindung betrifft ein Verfahren zur Beschriftung einer in einer Zeichnungsdatei (13, 13') abgespeicherten Zeichnung (10) in einer auswählbaren Sprache. Die Zeichnungsdatei (13) wird automatisch auf vorhandene Beschriftungsteile (11) durchsucht, die dann in einer Tabelle (19) abgelegt und durch eine zugeordnete Markierung (20) ersetzt werden. Die Übersetzungen der Beschriftungsteile (11) werden dann in die Tabelle (19) eingetragen. Nach Auswahl einer Sprache und einer Zeichnungsdatei (13') werden die Markierungen (20) automatisch durch die zugehörigen Beschriftungsteile (11) in der gewählten Sprache ersetzt. Das Anfertigen von Übersetzungen ist sehr einfach durchführbar, reduziert Fehlerquellen und der gesamte Speicherbedarf einer in verschiedenen Sprachen vorhandenen Zeichnung (10) ist reduziert.

## Beschreibung

Die vorliegende Erfindung betrifft ein Verfahren zur rechnerunterstützten Beschriftung von einer in einer Zeichnungsdatei abgespeicherten Zeichnung in einer auswählbaren Sprache.

Heutzutage werden Zeichnungen, insbesondere technische Zeichnungen, mit Hilfe eines Rechners und entsprechender Software (CAD) gefertigt. Solche Zeichnungen enthalten häufig eine Beschriftung, die zunächst in einer Sprache mittels der CAD-Software eingefügt wird.

Insbesondere bei weltweit agierenden Unternehmen werden derartige technische Zeichnungen in verschiedenen Sprachen benötigt, so daß die Beschriftung der Zeichnung übersetzt werden muß. Der Aufwand hierfür ist sehr groß, da die zur Übersetzung der Beschriftung benötigten Dolmetscher die CAD-Software nicht bedienen können, während der mit dieser Software vertraute GAB-Fachmann nicht in der Lage ist, die Übersetzung anzufertigen. Somit muß der Dolmetscher zunächst eine Übersetzung der Beschriftung anfertigen, wonach der CAD-Fachmann die Zeichnung entsprechend neu beschriftet. Dies führt dazu, daß jede Zeichnung in allen benötigten Sprachen abgespeichert wird, was einen enormen Speicheraufwand bedeutet, da die Zeichnungsdateien in der Regel sehr viel Speicherplatz in Anspruch nehmen. Desweiteren ist der Zeit- und Kostenaufwand für das Übersetzen sehr groß, da für jede Übersetzung ein entsprechender Dolmetscher und ein CAD-Fachmann benötigt werden. Ein weiterer Nachteil besteht darin, daß die Fehleranfälligkeit beim Beschriften der Zeichnung in einer dem CAD-Fachmann nicht geläufigen Sprache sehr groß ist, da dieser nicht versteht, was er in die Zeichnung einträgt, sondern die Beschriftung lediglich gemäß der Vorlage des Dolmetschers einfügt.

Es ist daher die Aufgabe der vorliegenden Erfindung ein Verfahren der eingangs genannten Art zu schaffen, das den Aufwand und damit auch die Kosten bei der Beschriftung in variablen Sprachen einer Zeichnung reduziert und gleichzeitig die Fehleranfälligkeit senkt.

Diese Aufgabe wird erfindungsgemäß dadurch gelöst, daß die Zeichnungsdatei automatisch auf vorhandene Beschriftungsteile durchsucht wird, wobei aufgefundene Beschriftungsteile in einer Tabelle abgelegt und in der zeichnungsdatei durch jeweils eine zugeordnete Markierung ersetzt werden, wonach in die Tabelle zu jedem Beschriftungsteil die zugehörige Übersetzung in wenigstens einer weiteren Sprache eingetragen wird, und daß nach Auswahl einer der möglichen Sprachen und dem Aufrufen der Zeichnungsdatei an der von der zugeordneten Markierung festgelegten Position in der Zeichnung automatisch der Beschriftungsteil in der gewählten Sprache eingesetzt wird.

Durch dieses Verfahren existiert für jede Zeichnung lediglich eine Zeichnungsdatei und eine Datei zum Abspeichern der Tabelle. Der Speicherbedarf kann hierdurch erheblich reduziert werden, da die Zeichnungsdatei, die einen sehr großen Speicherplatzbedarf aufweist, lediglich einmal im Speicher abgelegt werden muß. Der Speicherbedarf für die Tabelle hingegen ist relativ gering. Beim Übersetzen kann nun der Dolmetscher die Beschriftungsteile entweder unmittelbar in die Tabelle eintragen oder derart liefern, daß sie elektronisch weiterverarbeitet und in die Tabelle eingefügt werden können. Das aufwendige und fehleranfällige Umsetzen der Übersetzung in die Zeichnung durch den CAD-Fachmann entfällt somit. Es besteht die Möglichkeit, daß der Dolmetscher die Übersetzung der Beschriftungsteile direkt in der Tabelle ablegt, da die hierfür erforderlichen Kenntnisse verglichen mit den Anforderungen, die eine komplexe CAD-Software an den Bediener stellt, äußerst gering sind. Das gesamte verfahren ist nicht nur weniger zeit- und kostenintensiv, sondern zusätzlich weniger fehleranfällig.

Vorteilhafte Ausgestaltungsvarianten des erfindungsgemäßen Verfahrens gehen aus den Unteransprüchen hervor.

Zweckmäßigerweise ist die Zeichnungsdatei in einem gebräuchlichen Format, insbesondere als DXF-Datei abgespeichert. Hierdurch ist die Flexibilität bei der Verwendung verschiedener, für die Erstellung der Zeichnung verwendeter CAD-Programme gewährleistet.

Vorteilhafterweise bestimmt die Markierung lediglich die Position des zugeordneten Beschriftungsteils. Auf diese Weise kann der an der von der Markierung angegebenen Position einzufügende Beschriftungsteil in Abhängigkeit von der verwendeten Sprache in seiner Länge variieren.

Bei einer weiteren zweckmäßigen Ausgestaltung sind die maximalen Abmessungen eines Beschriftungsteils in Höhe und/oder Breite zur Vermeidung von Überdeckungen in der zeichnung vorgebbar. Auf diese Weise kann vermieden werden, daß ein in der Übersetzung längerer Beschriftungsteil benachbarte Partien in der Zeichnung überschreibt.

Die Abmessungen eines Beschriftungsteils können durch Änderungen in dessen Formatierung insbesondere automatisch variiert und an Vorgaben angepaßt werden. Dies ist eine sehr einfach durchführbare Maßnahme, um die Länge eines Beschriftungsteils zu ändern, beispielsweise wenn dieser mit anderen Teilen der Zeichnung überlappen würde.

Anhand der beigefügten Zeichnung wird eine Variante des erfindungsgemäßen Verfahrens näher erläutert. Es zeigen:
- Figur 1: eine schematische Darstellung der Aufgliederung einer Zeichnungsdatei mit Beschriftung in eine die Beschriftung enthaltende Tabelle und in eine neue Zeichnungsdatei, in der die Beschriftung durch Markierungen ersetzt ist,
- Figur 2: ein Ablaufdiagramm für die Ersetzung der Beschriftungsteile einer Zeichnung durch Markierungen und das Erstellen der Tabelle und
- Figur 3: das Ablaufdiagramm für das Aufrufen einer aus einer Zeichnungsdatei und einer Tabelle bestehenden, abgespeicherten Zeichnung.

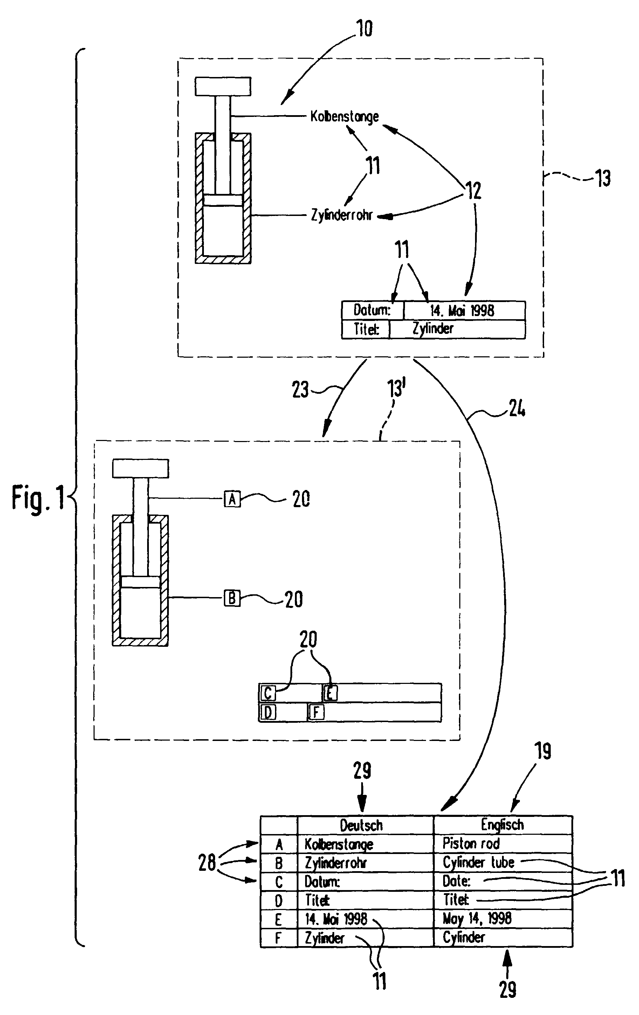

Zeichnungen 10, insbesondere technische Zeichnungen aller Art, wie Konstruktionszeichnungen im Bereich des Maschinenbau, elektrische Schaltpläne oder ähnliches enthalten häufig aus wenigstens einem beliebig langen Beschriftungsteil 11 bestehende Beschriftungen 12. Heutzutage werden derartige Zeichnungen 10 fast ausschließlich mit Hilfe eines Rechners unter Verwendung spezieller Zeichenprogramme (CAD) erstellt, so daß jede Zeichnung 10 in Form einer Zeichnungsdatei 13 vorliegt, wie dies in Figur 1 symbolisch gezeigt ist.

Aufgrund der zunehmenden Globalisierung in vielen Bereichen und insbesondere bei international tätigen Unternehmen besteht häufig die Forderung, daß derartige Zeichnungen 10 in mehreren Sprachen verfügbar sind. Das erfindungsgemäße Verfahren dient zur rechnerunterstützten Beschriftung einer bereits in Form einer Zeichnungsdatei 13 vorliegenden Zeichnung 10 in einer auswählbaren Sprache. Das Verfahren kann somit nicht nur für zukünftig erstellte Zeichnungen verwendet werden, sondern eignet sich auch für bereits erstellte Zeichnungen.

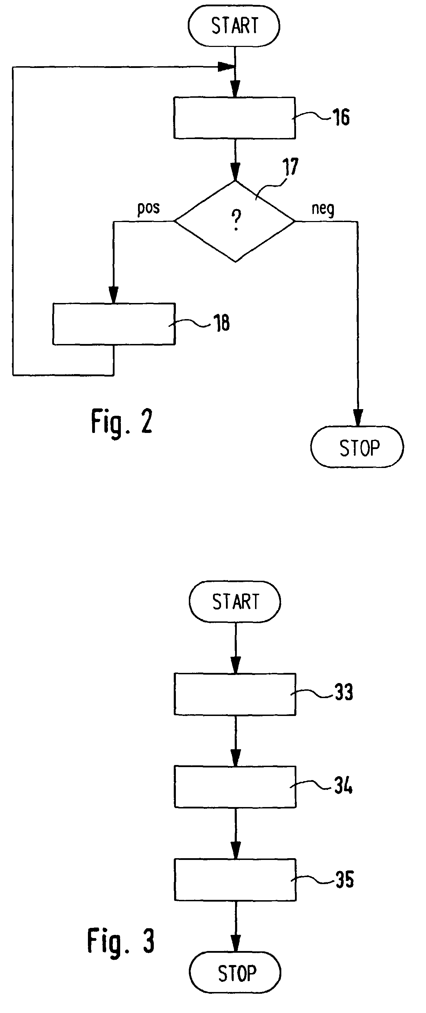

Das Verfahren wird mit Hilfe eines Rechners und eines hierfür vorgesehenen Beschriftungsprogramms durchgeführt. In Figur 2 ist eine erste Verfahrensstufe des bevorzugten Verfahrens dargestellt. Hierbei wird in einem ersten Schritt 16 der erste Beschriftungsteil 11 in der Zeichnungsdatei 13 gesucht.

In einer auf den ersten Schritt 16 folgenden Abfrage 17 wird dann überprüft, ob ein Beschriftungsteil 11 gefunden wurde. Ist dies nicht der Fall, so wird die erste Verfahrensstufe beendet. Kann das Auffinden eines Beschriftungsteiles 11 bejaht werden, so wird in einem zweiten Schritt 18 der aufgefundene Beschriftungsteil in einer Tabelle 19 abgelegt und in der Zeichnungsdatei durch eine zugeordnete Markierung 20 ersetzt. Anschließend wird wieder der erste Schritt 16 wie bereits beschrieben ausgeführt und der nächste Beschriftungsteil 11 in der Zeichnungsdatei 13 gesucht. Die Verfahrensstufe gemäß Figur 2 wird dann beendet, wenn entweder kein Beschriftungsteil 11 gefunden wurde oder alle Beschriftungsteile 11 in der Tabelle 19 abgelegt und durch entsprechende Markierungen 20 ersetzt wurden.

Dieses Aufspalten der ursprünglichen Zeichnungsdatei 13 in eine die Beschriftungsteile 11 aufweisende Tabelle 19 und eine neue, anstatt der Beschriftungsteile 11 Markierungen 20 enthaltende Zeichnungsdatei 13' ist in Figur 1 schematisch durch die Pfeile 23, 24 angedeutet. Die neue Zeichnungsdatei 13' sei im folgenden zur besseren Unterscheidbarkeit von der ursprünglichen Zeichnungsdatei 13 als Graphikdatei 13' bezeichnet, da sie keine Beschriftung 12 sondern lediglich graphische Elemente und Markierungen aufweist. Die Graphikdatei 13' unterscheidet sich hinsichtlich des Dateinamens nicht von der ursprünglichen Zeichnungsdatei 13, so daß sie diese ersetzt.

In die Tabelle 19 wird nun zu jedem Beschriftungsteil 11 die Übersetzung in beliebig vielen Sprachen eingetragen. Sowohl der aus der Zeichnung 10 extrahierte Beschriftungsteil 11 als auch seine Übersetzungen stellen jeweils einen eigenständigen Beschriftungsteil 11 dar, der einer einzigen Markierung 20 in der Graphikdatei 13' zugeordnet ist. Diese Zuordnung ist in Figur 1 schematisch durch Großbuchstaben A bis F dargestellt, wobei alternativ jedes beliebige Zuordnungsverfahren zwischen den Beschriftungsteilen 11 und den Markierungen 20 angewandt werden könnte. Beispielsweise könnte die Zuordnung auch über Zahlen oder die Reihenfolge erfolgen, in der die Markierungen 20 in der Graphikdatei 13' beziehungsweise die Beschriftungsteile 11 in der Tabelle 19 abgelegt sind.

Die in der Tabelle 19 eingetragenen Beschriftungsteile 11 gehören zeilenweise zu jeweils einer Markierung 20 in der Graphikdatei 13'. Die Entscheidung, welcher der Beschriftungsteile 11 einer einzigen Zeile 28 der Tabelle 19 anstelle der Markierung 20 in der Zeichnung 10 erscheinen soll, erfolgt über die Auswahl der Sprache. Die Beschriftungsteile 11 einer gemeinsamen Sprache stehen untereinander in einer gemeinsamen Spalte 29 der Tabelle 19.

In Figur 3 ist das Ablaufdiagramm zum Laden einer Zeichnung 10 in den Arbeitsspeicher des Rechners dargestellt, wobei in einem ersten Schritt 33 zunächst der Dateiname angegeben werden muß, unter dem die Graphikdatei 13' abgespeichert ist. Daraufhin muß der Benützer in einem zweiten Schritt 34 angeben, in welcher Sprache er die Beschriftung wünscht. Hierbei kann die Auswahl der Sprachen derart beschränkt werden, daß nur die Sprachen wählbar sind, für die in der zugehörigen Tabelle 19 Beschriftungsteile 11 eingetragen sind. Nachdem sowohl die Datei als auch die Sprache ausgewählt sind, werden die Markierungen 20 durch die Beschriftungsteile 11 ersetzt (Schritt 35) und erscheinen in der Zeichnung 10 auf dem Monitor des Rechners. Fehlt eine Übersetzung, dann kann der Text der Stammsprache eingesetzt werden.

Wird die Graphikdatei 13' wieder geschlossen, so werden eventuell vorgenommene Änderungen in der Beschriftung 12 unmittelbar in der Tabelle 19 abgelegt.

Die zu einem Beschriftungsteil 11 zugehörigen Formatierungen, zum Beispiel der Zeilenumbruch bei einem mehrzeiligen Beschriftungsteil 11 oder Tabulatoren, werden zusammen mit dem Text des Beschriftungsteils 11 in der Tabelle 19 abgespeichert. Beim Ersetzen der Markierungen 20 durch den Beschriftungsteil 11 werden derartige Formatierungen übernommen und der Beschriftungsteil 11 erscheint in der Zeichnung 10 in der gewünschten Form.

Die Übersetzung jedes Beschriftungsteils 11 sollte derart erfolgen, daß die Textlänge der Übersetzung nicht über die Länge des ursprünglichen Beschriftungsteils 11 hinausgeht, um Überlappungen oder Überdeckungen in der Zeichnung 10 zu vermeiden. Es wäre jedoch auch denkbar, daß einer Markierung 20 ein Beschriftungsfeld zugeordnet wird, das die maximalen Abmessungen in Höhe und/oder Breite des an dieser Stelle einzusetzenden Beschriftungsteils 11 vorgibt. Dies könnte zum Beispiel dann erfolgen, wenn die Gefahr besteht, daß der Beschriftungsteil 11 andere, benachbarte Partien in der Zeichnung 10 überschreibt.

Die Anpassung der Abmessungen eines Beschriftungsteils 11 kann beispielsweise durch eine entsprechende Änderung seiner Formatierung folgen. Hierbei kommt z.B. eine andere Schriftgröße, eine andere Schriftart oder ähnliches in Frage. Dies führt dazu, daß die Abmessungen des Beschriftungsteils 11 entweder an entsprechende Vorgaben angepaßt oder entstandene Überdeckungen in der Zeichnung 10 wieder rückgängig gemacht werden können. Eine solche Anpassung der Formatierung kann auch automatisch erfolgen.

## Patentansprüche

1. Verfahren zur rechnerunterstützten Beschriftung von einer in einer Zeichnungsdatei (13) abgespeicherten Zeichnung (10) in einer auswählbaren Sprache, dadurch gekennzeichnet, daß die Zeichnungsdatei (13) automatisch auf vorhandene Beschriftungsteile (11) durchsucht wird, wobei aufgefundene Beschriftungsteile (11) in einer Tabelle (19) abgelegt und in der Zeichnungsdatei (13') durch jeweils eine zugeordnete Markierung (20) ersetzt werden, wonach in die Tabelle (19) zu jedem Beschriftungsteil (11) die zugehörige Übersetzung in wenigstens einer weiteren Sprache eingetragen wird, und daß nach Auswahl einer der möglichen Sprachen und dem Aufrufen der Zeichnungsdatei (13') an der von der zugeordneten Markierung (20) festgelegten Position in der Zeichnung (10) automatisch der Beschriftungsteil (11) in der gewählten Sprache eingesetzt wird.

2. Verfahren nach Anspruch 1, dadurch gekennzeichnet, daß die Zeichnungsdatei (13, 13') in einem gebräuchlichen Format, insbesondere als DXF-Datei abgespeichert ist.

3. Verfahren nach Anspruch 1 oder 2, dadurch gekennzeichnet, daß die Markierung (20) lediglich die Position des zugeordneten Beschriftungsteils (11) bestimmt.

4. Verfahren nach einem der Ansprüche 1 bis 3, dadurch gekennzeichnet, daß die maximalen Abmessungen eines Beschriftungsteils (11) in Höhe und/oder Breite zur Vermeidung von Überdeckungen in der Zeichnung (10) vorgebbar sind.

5. Verfahren nach einem der Ansprüche 1 bis 4, dadurch gekennzeichnet, daß die Abmessungen eines Beschriftungsteils (11) durch Änderungen in dessen Formatierung insbesondere automatisch variiert und an Vorgaben angepaßt werden können.
